# FASCICULE DE BREVET EUROPEEN

(11) **EP 2 454 919 B1**
(45) Date de publication et mention de la délivrance du brevet: **17.04.2013**
(21) Numéro de dépôt: 10751999.3
(22) Date de dépôt: 12.07.2010
(51) Int. Cl.: H05B 6/12

(54) **DISPOSITIF DE CHAUFFE PAR INDUCTION**
VORRICHTUNG ZUM INDUKTIVEN ERWÄRMEN
DEVICE FOR INDUCTION HEATING

(30) Priorité: 17.07.2009 FR 0954959
(43) Date de publication de la demande: 23.05.2012
(73) Titulaire: Mag Tech, 69400 Gleize (FR)
(72) Inventeur: GASPARD, Jean-Yves, F-69400 Gleize (FR)
(74) Mandataire: Palix, Stéphane
(86) Numéro de dépôt international: PCT/FR2010/051466
(87) Numéro de publication internationale: WO 2011/007089

(56) Documents cités:
- EP-A1- 1 017 256
- EP-A1- 1 074 823
- DE-A1- 3 602 666
- GB-A- 1 428 555
- US-A- 3 949 183

## Description

### Domaine technique

La présente invention se rapporte au domaine des dispositifs de cuisson par induction, communément appelés « plaques à induction » ou « tables à induction ».

### Etat de la technique antérieure

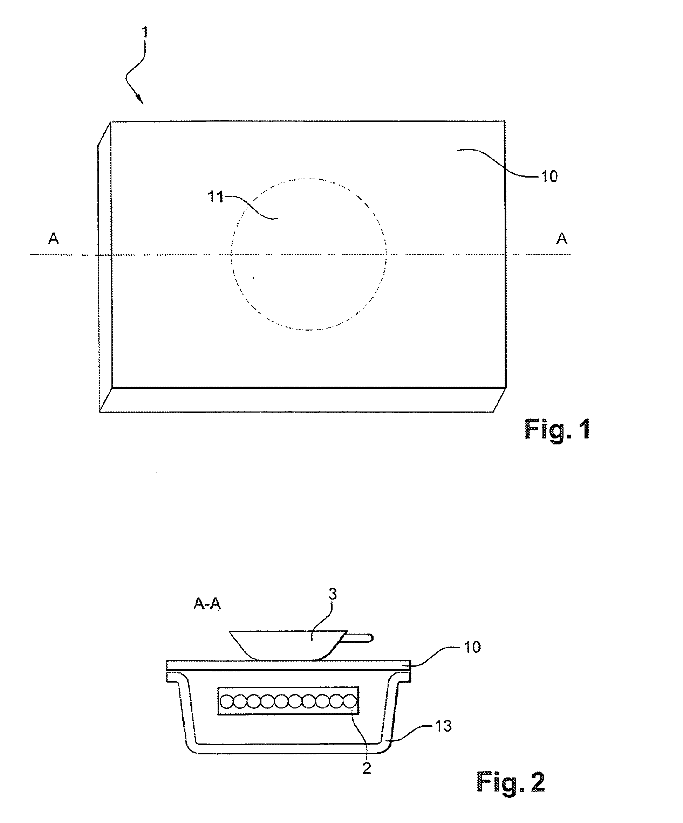

De manière générale, et en référence aux figures 1 et 2, un dispositif 1 de chauffe par induction comprend notamment un socle 10 formant surface plane, généralement en matériau amagnétique et isolant électrique résistant aux hautes températures, tel que le verre vitrocéramique appelé communément vitrocéramique, destinée à supporter un récipient 3 adapté pour la cuisson par induction. Le socle 10 présente une zone de chauffe 11 (ou foyer de cuisson) sous laquelle est disposée une bobine d'induction 2 (ou inducteur) placée dans un carter 13 (ou cadre), généralement réalisé en tôle d'acier, supportant le socle 10. La bobine d'induction 2, alimentée par un générateur de courant alternatif, crée un champ électromagnétique variable dans le récipient 3 à fond de préférence ferromagnétique placé dans la zone de chauffe 11. Des courants de Foucault apparaissent et produisent par effet Joule l'échauffement du récipient 3, et par conduction thermique celui des aliments contenus dans le récipient 3.

Bien que le récipient soit chauffé par l'intermédiaire d'un champ électromagnétique, le rendement énergétique n'est pas encore optimal. En effet, toute la chaleur n'est pas transmise aux aliments contenus dans le récipient car la surface du fond du récipient étant en contact avec la portion de surface du socle formant la zone de chauffe, une partie de la chaleur du récipient est perdue par conduction thermique sur cette portion de surface vitrocéramique formant zone de chauffe.

Cette zone est donc chauffée par le contact du récipient et pour des raisons de sécurité, les constructeurs avertissent l'utilisateur de la température de la vitrocéramique par des témoins de chaleur résiduelle, puisque la zone de chauffe reste chaude longtemps lorsque le récipient est retiré.

L'entrefer du circuit magnétique formé par le circuit magnétique de la bobine d'induction et le récipient posé au niveau de la zone de chauffe, est principalement défini par l'épaisseur du socle vitrocéramique, dont l'épaisseur est de l'ordre de 4 à 5 millimètres, à laquelle il faut ajouter l'épaisseur d'un isolant thermique interposé entre l'inducteur et le socle, destiné à protéger l'inducteur des températures élevées. L'entrefer est ainsi typiquement de l'ordre de 5 à 8 millimètres. Les dimensions de cet entrefer nécessitent d'utiliser une bobine contenant plus de spires ou plus de circuit magnétique pour atteindre des caractéristiques d'impédance convenables, ce qui augmente non seulement le coût de fabrication dans la mesure où la réalisation de l'inducteur nécessite plus de matériau conducteur ou magnétique, mais provoque également l'apparition de fuites de champ magnétique dans l'entrefer.

La réduction des dimensions de l'entrefer s'avère cependant difficile à réaliser. En effet, le socle vitrocéramique doit être suffisamment résistant pour supporter le poids des récipients ferromagnétiques et d'éventuels chocs. Or, une réduction de l'épaisseur du socle vitrocéramique détériorerait la tenue mécanique du socle et ne permettrait pas de réaliser des tables de cuisson de grandes largeurs ou destinées à des professionnels, ou même de dimensions standards.

En outre, la température de chauffe pouvant atteindre des valeurs élevées, réduire l'épaisseur de la plaque vitrocéramique et celle de l'isolant thermique ne permettrait pas d'assurer une bonne isolation thermique de l'inducteur.

Un autre inconvénient de ce type de solution, est qu'il est difficile de mesurer la température du récipient avec précision, notamment à cause de l'épaisseur du socle. En effet, la mesure de la température s'effectue à l'aide d'un capteur de température généralement placé sous le socle vitrocéramique. Du fait de l'épaisseur de la vitrocéramique, la mesure directe de la température du récipient par le capteur de température reste très approximative, voire inexacte.

Du fait ce cette mauvaise mesure de la température du récipient, les récipients ont tendance à être surchauffés à des températures pouvant atteindre 500°C, voire plus, alors que la température maximum de cuisson réellement nécessaire n'est que de l'ordre de 250°C. D'une part, cette surchauffe détériore certains récipients en provoquant notamment une déformation concave du fond de ces récipients lors de l'élévation de la température, et d'autre part, l'utilisation de récipient présentant un fond déformé rend encore plus inexacte la mesure de la température.

Le document EP 1 017 256 propose une solution de mesure de la température du récipient en chauffe, notamment en introduisant un élément sensible du capteur au contact avec le fond du récipient. L'élément sensible disposé dans un trou traversant le socle vitrocéramique, doit être de taille réduite pour éviter toute dissipation thermique trop importante. Cette solution n'est cependant pas adapté aux récipients présentant des déformations concaves car l'élément sensible ne permet pas une bonne mesure de la température lorsque le fond du récipient est déformé et n'est plus en contact direct avec le support. En outre, la réalisation de trou traversant dans le socle vitrocéramique fragilise la tenue mécanique et pose des problèmes d'étanchéité couteux à résoudre.

L'amélioration de la mesure de la température peut également être réalisée par l'intégration de systèmes de mesure tenant compte des déformations des récipients et des imprécisions dues à l'épaisseur de la vitrocéramique, mais ces systèmes de mesure sont cependant complexes et coûteux.

Par ailleurs, bien que la vitrocéramique présente l'avantage d'être résistant aux hautes températures, ce matériau reste coûteux et sensible aux chocs et aux abrasions.

Il y a donc un intérêt à trouver une solution permettant notamment, non seulement de limiter les pertes de chaleur, 'mais également d'assurer une bonne mesure de la température pour optimiser le rendement, tout en utilisant des matériaux moins cher et résistant aux chocs et aux abrasions.

Dans ce contexte, la présente invention a pour but de proposer un dispositif de cuisson par induction exempt de l'une au moins des limitations précédemment évoquées. Un objectif de l'invention est notamment de proposer un dispositif de cuisson par induction présentant une plaque plane en matériau autre que la vitrocéramique, résistant aux hautes températures, mais également aux chocs et aux abrasions, sans risque pour l'utilisateur. Un autre objectif de l'invention est d'améliorer le rendement énergétique, mais également la mesure de la température des récipients.

### Exposé de l'invention

L'invention a ainsi pour objet un dispositif de chauffe par induction comprenant au moins un socle présentant au moins une zone de chauffe, et au moins un inducteur disposé sous le socle en regard de la zone de chauffe.

Selon l'invention, le socle comprend un évidement délimitant la zone de chauffe, et à l'intérieur duquel est disposé un support recouvrant partiellement ladite zone de chauffe et partiellement solidarisé au socle, ledit support étant apte à former la zone de contact qui supporte un récipient, de sorte à maintenir ledit récipient au dessus de l'évidement.

En d'autres termes, contrairement à l'art antérieur où la surface du support destiné à supporter le récipient s'étend sous toute la surface du fond du récipient, l'invention propose de réduire la surface dudit support. Cette réduction de la surface du support permet notamment de limiter la surface de contact du récipient avec le support et donc de réduire les pertes de chaleur du récipient par conduction thermique, tout en assurant le maintien stable du récipient. Cette solution présente en outre l'avantage de permettre l'utilisation, pour le socle et pour le support, de matériaux autres que la vitrocéramique, de préférence résistants aux chocs, aux abrasions et aux hautes températures.

Avantageusement, le socle et le support sont en matériau métallique, de préférence résistant aux chocs, aux abrasions et aux hautes températures, par exemple en acier inoxydable austénitique. Le socle peut être relié à un potentiel de référence, tel que la terre.

Ainsi, selon cette réalisation particulière, les éléments susceptibles d'être en contact direct avec le récipient, tels que le socle et le support, et donc susceptibles d'être touchés par un utilisateur, sont réalisés en matériaux métalliques, contrairement aux solutions de l'art antérieur qui, pour des raisons de sécurité, ne permettent pas que ces éléments, socle et support, soient métalliques.

En effet, il est inimaginable pour un homme du métier de remplacer la plaque vitrocéramique utilisée pour les dispositifs de chauffe par induction de l'art antérieur par une plaque métallique. D'une part, d'importants courants induits circuleraient dans la plaque métallique, provoquant un échauffement important de la plaque métallique, dangereux pour l'utilisateur, et d'autre part, le récipient posé sur cette plaque serait, non pas chauffé par induction, mais par transfert de la chaleur de la plaque métallique, ce qui est contraire à l'effet recherché pour un chauffage par induction.

A l'inverse, cette réalisation particulière de l'invention offre la possibilité d'utiliser un socle et un support en matériaux métalliques. Le support ne couvrant que partiellement la zone de chauffe et pouvant être découpé de façon à minimiser l'apparition de courants induits, son échauffement par induction est très limité. De plus, le support ne présentant qu'une portion en contact avec le socle, les transferts de chaleur entre le récipient, le support et le socle sont également limités.

En outre, dans les solutions classiques, l'inducteur et le récipient posé sur la zone de chauffe forment un condensateur électrique. Lorsque l'inducteur est alimenté, le récipient se charge électriquement, et un petit courant de fuite est susceptible de traverser le corps d'une personne touchant le récipient. La solution proposée dans cette réalisation particulière permet de résoudre ce problème. En effet, dans le cas notamment d'un récipient non revêtu (par exemple non émaillé), le support et le socle étant en matériau métallique donc conducteur, et le support présentant une portion en contact avec le socle, le récipient est ainsi électriquement reliée à la terre protégeant de ce fait l'utilisateur des fuites de courants.

Dans le cas où l'inducteur possède une surface supérieure suffisamment solide, le support peut être posé directement sur ladite surface supérieure de l'inducteur. Dans ce mode de réalisation particulier, l'étanchéité de l'ensemble formé par la surface de l'inducteur, le support et le socle peut être réalisée à l'aide d'un joint. Cette étanchéité peut être réalisée par un procédé classique, tel que celui utilisé dans l'art antérieur pour réaliser l'étanchéité entre une plaque vitrocéramique et un cadre en acier.

Avantageusement, il est également possible de prévoir une plaque en matériau amagnétique et isolant électrique s'étendant sur toute la zone de chauffe et sur laquelle peut reposer ledit support. La plaque peut également être surmoulée au support. Cette technique permet en outre de réaliser des formes diverses pour conférer à la plaque amagnétique d'autres fonctions comme le support du système inducteur, des dispositifs de mesure de température, voire de l'ensemble inducteur et système électronique associé.

En d'autres termes, l'évidement définissant la zone de chauffe comprend une plaque en matériau amagnétique et isolant électrique sur lequel est disposé le support. Cette plaque amagnétique et isolant électrique permet de protéger et d'isoler l'inducteur tout en laissant traverser le champ électromagnétique. Le support posé sur cette plaque amagnétique et isolant électrique maintient le récipient au dessus de l'évidement et évite tout contact du récipient avec la plaque amagnétique et isolant électrique. Il est donc possible d'utiliser, pour la réalisation de la plaque amagnétique et isolant électrique, un matériau présentant une tenue mécanique moindre, à savoir moins résistant aux chocs et aux abrasions, par exemple en grès, en céramique, en plastique, en mica ou en alliage mica-verre, en tissu de verre imprégné silicone ou verre, qui sont généralement des matériaux de moindre coût. Par ailleurs, cette solution autorise l'utilisation de matériau de couleurs variées. En outre, cette réalisation offre la possibilité d'utiliser une plaque amagnétique et isolant électrique d'épaisseur réduite, par exemple inférieure ou égale à cinq millimètres, et par conséquent permet de réduire l'entrefer du circuit magnétique formé par l'inducteur et le récipient, et donc permet de réaliser des systèmes inducteurs à plus faibles pertes, tout en diminuant leur coût. En effet, si les dimensions de l'entrefer sont réduites, il est possible d'utiliser des inducteurs contenant moins de spires pour atteindre des caractéristiques d'impédances convenables, ce qui permet de réduire le coût de fabrication, ainsi que les fuites électromagnétiques.

Selon un mode de réalisation, le dispositif comprend en outre au moins un capteur de température dont la partie sensible est en contact avec le support.

Le capteur de température est de préférence disposé en regard du centre du support.

Ce mode de réalisation offre la possibilité de mesurer la température du récipient de manière plus précise, notamment lorsque le support est réalisé en matériau métallique.

Selon un mode de réalisation particulier, la plaque amagnétique et isolant électrique présente au moins un évidement dans lequel est disposé au moins un capteur de température dont la partie sensible est en contact avec le support.

Dans ce mode de réalisation, la plaque amagnétique et isolant électrique ne subissant pas des contraintes mécaniques importantes, il est possible de prévoir un évidement, par exemple un trou traversant la plaque amagnétique et isolant électrique pour y loger le capteur de température. Cette réalisation a l'avantage de permettre de placer le capteur de température au plus près du support et idéalement au contact de ce dernier, améliorant ainsi la mesure de la température du récipient.

Le capteur de température peut également être disposé dans la plaque amagnétique et isolant électrique au contact du support par surmoulage.

Selon un mode de réalisation particulier, le support est en forme d'étoile présentant une pluralité de branches, l'extrémité libre d'au moins une desdites branches étant solidarisée au socle.

Cette forme particulière offre l'avantage de permettre au support de maintenir le récipient stable au dessus de l'évidement tout en limitant la surface du support avec le récipient, et réduit ainsi les transferts de chaleur par conduction thermique.

En outre, lors de la chauffe, la surface du fond du récipient en contact avec le support diminue généralement car le fond des récipients se déforme lors de la chauffe. Un capteur de température ponctuel disposé par exemple au centre du support délivre donc de ce fait des mesures erronées. La forme particulière du support proposée ci-dessus permet d'une part au récipient, même présentant un fond déformé, d'être en permanence en contact avec le support au niveau de toutes ses branches, et d'autre part à la chaleur transmise par le récipient au support d'être répartie de manière homogène sur le support conducteur thermique, rendant la mesure de la température beaucoup plus précise.

Une mesure plus précise de la température du récipient autorise une meilleure régulation en température ce qui permet d'une part, d'optimiser la puissance de chauffe, d'autre part, de diminuer les températures maximum à fournir, ce qui rend possible l'utilisation de matériaux supportant des températures maximum moins élevées (par exemple 250°C au lieu de 500°C).

La surface de contact entre le support de forme particulière et le récipient étant bien moindre, le rendement thermique est bien meilleure. En outre, la régulation thermique via le capteur de température qui mesure plus précisément la température du récipient, évite à celui-ci de surchauffer. Ceci permet une plus grande sécurité en fonctionnement. D'une part la température de chauffe peut être limitée à la température nécessaire aux cuissons, évitant par exemple de ce fait l'inflammation de films d'huile, et d'autre part, la température du support peut être fortement limitée lorsque le récipient est retiré, permettant un refroidissement plus rapide du support en raison de sa plus faible inertie thermique.

Le dispositif de chauffe par induction peut en outre comprendre un dispositif visuel fonction de la température du support. Par exemple, il est possible d'appliquer localement sur le support un dispositif indicateur de la température comme une encre à changement de phase, permettant de visualiser si le support est à une température donnée par exemple encore trop chaud pour être nettoyé ou simplement touché.

Par exemple, le support présente au moins une première portion en forme de croix, l'extrémité libre d'au moins une des branches de ladite portion étant solidarisée au socle.

Le support peut en outre présenter au moins des deuxième et troisième portions en arc de cercle, disposées en regard l'une de l'autre symétriquement par rapport à au moins une des branches de ladite première portion.

Selon un mode de réalisation particulier, le support est en forme d'étoile, le profil de chaque branche dudit support présentant une base supérieure destinée à être en contact avec le récipient et une base inférieure en regard de ladite base supérieure, ladite base supérieure étant de longueur inférieure à celle de la base inférieure.

Selon un autre mode de réalisation particulier, le support peut être constitué d'une base principale et d'une multitude de branches dont le nombre et la largeur sont optimisées pour minimiser le couplage magnétique au système inducteur tout en assurant un rôle de support stable et un rôle de captage de la température de la charge, en contact avec ce support. Par exemple, le support peut être en forme de sapin.

Ces profils, décrits à titre d'exemples non limitatifs, ont notamment l'avantage de réduire la surface de contact du support avec le récipient pour limiter les transferts thermique, tout en offrant un maintient sûr et stable du récipient.

De manière générale, la géométrie du support pourra être le résultat d'un compromis entre :
- une surface suffisante pour maintenir le récipient au dessus de l'évidement, de sorte que le plus petit récipient utilisable ne touche la plaque amagnétique et isolant électrique, et ce même si le fond du récipient présente des déformations ;
- une surface découpée présentant un minimum de couplage avec le champ magnétique inducteur afin d'éviter que le support ne soit le siège de courants induits trop importants :
- une surface de contact minimale pour limiter les échanges de chaleur avec le récipient ; et
- une surface et une inertie thermique optimisée pour assurer un transfert thermique optimal vers le capteur de température qui lui est associé.

Par ailleurs, le système inducteur peut être pourvu d'un circuit magnétique. Le dimensionnement de ce circuit magnétique, notamment sa forme, peut être optimisé pour réduire le couplage de la surface découpée du support avec le système inducteur, par exemple en augmentant le flux magnétique dans les zones où le support est absent, tout en évitant de diriger ce flux dans les zones où se trouve le support.

Si une forme particulière de support présente un intérêt, la minimisation des pertes par courants induits dans cette forme particulière peut être considéré comme secondaire. En effet, ces pertes ne sont pas générées au dessous de la plaque amagnétique et isolant électrique mais au dessus, et participent donc potentiellement au chauffage de la charge, et donc au rendement.

Avantageusement, l'épaisseur formée par celle de la plaque amagnétique et isolant électrique combinée à celle du support est inférieure ou égale à cinq millimètres.

Les bordures du socle peuvent en outre former le carter du dispositif de chauffe globale.

Le dispositif peut en outre comprendre un système de régulation de la température du récipient.

Selon un autre mode de réalisation, le dispositif de chauffe peut en outre comprendre un module de mesure de poids, tel que par exemple un capteur piézoélectrique associé à un module d'acquisition et de traitement des signaux. Le capteur piézoélectrique peut être disposé à proximité du capteur de température entre le support et la plaque isolante. Le support peut être solidarisé à la plaque isolante au moyen d'un joint d'étanchéité résistant en température, tel que par exemple un joint en silicone, autorisant un abaissement suffisant du support de manière à agir sur le capteur piézoélectrique notamment lorsqu'un récipient est posé sur le support. Bien entendu, le module de mesure de poids peut être agencé d'une autre manière dans le dispositif, dans la mesure où il existe une liaison mécanique rigide (par exemple un axe) apte à transmettre toute déformation mécanique du support au module de mesure de poids.

Dans ce mode de réalisation, il est ainsi possible de peser le récipient posé sur le support mais aussi le contenu du récipient, notamment après tarage. En outre, cette réalisation offre notamment la possibilité de doter le dispositif de chauffe de fonctions supplémentaires telles que par exemple la cuisson automatique. Cette fonction « cuisson automatique » peut se traduire par l'arrêt automatique de la cuisson lorsque le poids détecté est inférieur à une valeur seuil traduisant l'évaporation d'une certaine quantité de liquide.

En outre, cette fonction de pesage peut également être utilisée pour la régulation et la sécurisation du système de chauffe, en interdisant par exemple d'associer des puissances trop fortes pour des récipients trop légers. Dans le cas par exemple de chauffage de récipients formés de matériau amagnétique qui sont soumis à une force de répulsion élevée en fonction de la puissance, la connaissance préalable du poids de l'ustensile à chauffer permet alors de limiter la puissance maximale à des valeurs inférieure à la valeur à laquelle l'ustensile pourrait être éjecté du système inducteur. La fonction de pesage peut également être utilisée pour la détection de récipients posés sur le foyer, en complément ou en substitution des systèmes de détection de présence de récipient basés sur le principe de l'impédance du système inducteur.

Ainsi, contrairement aux systèmes de chauffage par induction de l'art antérieur dans lesquels le support en verre vitrocéramique ne pouvait pas être percé sans être fragilisé et était uniquement plan, l'utilisation de socle métallique autorise différentes formes notamment non planes réalisées par exemple par emboutissage. Par exemple, le socle métallique peut présenter au niveau de certain des foyers de cuisson, des formes et des dimensions particulières telles que des limites ou rebords, ou une forme adaptée pour l'utilisation d'ustensiles spécifiques, comme par exemple un wok. Il est ainsi possible de former le socle métallique de manière à réaliser un plan de travail comprenant non seulement des foyers de cuisson par induction classiques ou présentant une forme particulière, mais également des reliefs ou emplacements destinés à maintenir ou recevoir des accessoires ainsi que leur système de commande. On peut par exemple envisager des accessoires à moteur de type mélangeurs, mixeurs, ou purement résistifs de type grill par résistance ou infrarouge, ou autres, qui pourraient être fixés solidement dans l'environnement des foyers afin de permettre différents travaux sur la préparation pendant la chauffe. Ces accessoires peuvent être alimentés par des prises sécurisées réalisés dans le socle ou être directement alimentés par un inducteur temporairement non utilisé pour la chauffe. Dans ce dernier cas, les cycles de commande de ces système peuvent être commandés à partir d'un module de commande du système induction, qui gérerait donc non seulement la fonction de chauffage et/ou de pesage mais aussi différentes fonctions annexes de malaxage, hachage, brassage, piloté par la commande du système en fonction des demandes de l'utilisateur ou de recettes prédéfinis intégrant des séquences particulière de fonctionnement des différents éléments du système en fonction aussi de l'information de température et de poids disponible continuellement.

Dans les modes de réalisation présentés ci-dessus, l'évidement combiné à la forme du support pour récipient à chauffer peuvent former des recoins dans lesquels des salissures peuvent s'y incruster, rendant le nettoyage du dispositif de chauffe moins aisé.

Ainsi, dans un autre mode de réalisation, le dispositif de chauffe par induction peut comprendre au moins :
- un inducteur définissant une zone de chauffe ;
- un support pour récipient disposé à l'aplomb de l'inducteur ; et
- une plaque amagnétique et isolant électriquement disposée entre le support et l'inducteur, le support pouvant reposer sur ladite plaque isolante.

En d'autres termes, dans cet autre mode de réalisation, il n'y a plus d'évidement autour du support, le support pour récipient étant disposé sur la plaque isolante. Les recoins dans lesquels les salissures peuvent s'y incruster sont donc réduits, ce qui facilite le nettoyage. La plaque isolante peut donc s'étendre au-delà de la zone de chauffe de manière à constituer par exemple un plan de travail pour l'utilisateur.

La plaque isolante peut être réalisée dans un matériau présentant un bon compromis entre une bonne tenue mécanique et un moindre coût. Par exemple, la plaque isolante peut être en mica, en verre renforcé ou dans un alliage mica-verre.

Le support pour récipient peut présenter une forme en croix ou toute autre forme assurant par exemple à la fois un nettoyage aisé, une stabilité du récipient, et une surface de contact réduite avec le récipient.

Le support peut en outre être en matériau métallique, de préférence résistant aux chocs, aux abrasions et aux hautes températures, par exemple en acier inoxydable austénitique. Le support métallique peut être relié à un potentiel de référence, tel que la terre, pour les mêmes raisons exposées ci-dessus.

Le support peut être fixé à la plaque isolante de façon amovible via un système de fixation intégré à la plaque isolante et en coopération avec le support. Par exemple, le système peut être tel qu'il est possible de fixer le support à la plaque isolante, de retirer le support, de tourner le support. Le système de fixation peut en outre constituer une partie de la liaison mécanique rigide apte à transmettre toute déformation mécanique du support au module de mesure de poids.

En outre, le dispositif de chauffe peut intégrer un système vibrant apte à conférer un mouvement de faible amplitude au support et donc au récipient posé sur ce support, pour éviter par exemple que les aliments contenus dans ce récipient n'adhèrent à la paroi interne du récipient. Par exemple, ce système vibrant peut comprendre un électro-aimant ou un vibreur. Bien entendu, il est préférable de sécuriser la pose du récipient sur le support afin d'éviter que le récipient ne glisse hors du foyer de cuisson du fait de ces mouvements de vibration, par exemple via des rebords présents sur le support. En outre, de préférence, le support ne repose pas directement sur la plaque isolante mais est maintenu au-dessus de la plaque par le système de fixation qui autorise certains degrés de liberté au support.

Le dispositif de chauffe peut en outre comprendre un cadre formant le carter du dispositif de chauffe globale. Ce cadre peut être en matériau métallique et peut être relié au potentiel de référence. De ce fait, lorsque le support est en matériau métallique, le support peut être relié au cadre via un bras s'étendant du cadre au support.

En d'autres termes, ce cadre peut s'assimiler au socle décrit dans l'une des réalisations précédemment décrites, dans laquelle les bordures du socle peuvent former le carter du dispositif de chauffe, à la différence que l'évidement s'étend bien au-delà de la zone de chauffe et englobe la ou les zone(s) de chauffe et toute surface de la plaque isolante exploitable par l'utilisateur.

Par exemple, le dispositif de chauffe peut comprendre plusieurs systèmes inducteurs définissant plusieurs zones de chauffe, un support étant posé sur la plaque isolante au niveau de chaque zone de chauffe.

Chaque support peut être en matériau métallique et relié au potentiel de référence. Par exemple, chacun des supports métalliques peut être relié au potentiel de référence via un bras solidarisé au carter. Il est également possible de relier un des supports via un bras au carter et de relier les autres supports à ce support.

Bien évidement, la mise en place d'un capteur de température et/ou d'un module de mesure de poids est possible, et peut être réalisée comme décrit précédemment. Le capteur de température permet par exemple de mieux réguler la température de chauffe pour garantir à la fois une cuisson optimale et une température adaptée à la plaque isolante.

### Brève description des dessins

D'autres caractéristiques et avantages de l'invention ressortiront clairement de la description qui en est faite ci-après, à titre indicatif et nullement limitatif, en référence aux figures annexées, dans lesquelles :
- la figure 1, décrite précédemment, est une vue schématique de dessus d'un dispositif de chauffe par induction de l'art antérieur ;
- la figure 2, décrite précédemment, est une vue schématique du dispositif de la figure 1 montré en coupe selon le plan A-A de la figure 1 ;
- la figure 3 est une vue schématique de dessus d'un dispositif de chauffe par induction selon un mode de réalisation de l'invention ;
- la figure 4 est une vue schématique du dispositif selon la figure 3 montré en coupe selon le plan B-B de la figure 3 ;
- la figure 5 est vue schématique du dispositif selon un autre mode de réalisation montré en coupe selon le plan B-B de la figure 3 ;
- les figure 6 et 7 sont des vues schématique de dessus d'un support selon des modes de réalisation de l'invention ;
- la figure 8 est une vue schématique en perspective du profil d'une partie d'une branche du support selon un mode de réalisation de l'invention
- la figure 9 est une vue schématique de dessus d'un dispositif de chauffe par induction selon un autre mode de réalisation de l'invention ;
- la figure 10 est une vue schématique du dispositif selon la figure 9 montré en coupe selon le plan C-C de la figure 9 ;
- la figure 11 est une vue schématique de dessus d'un dispositif de chauffe par induction selon un autre mode de réalisation de l'invention ; et
- la figure 12 est une vue schématique du dispositif selon la figure 11 montré en coupe selon le plan D-D de la figure 11.

### Exposé détaillé d'un mode de réalisation particulier

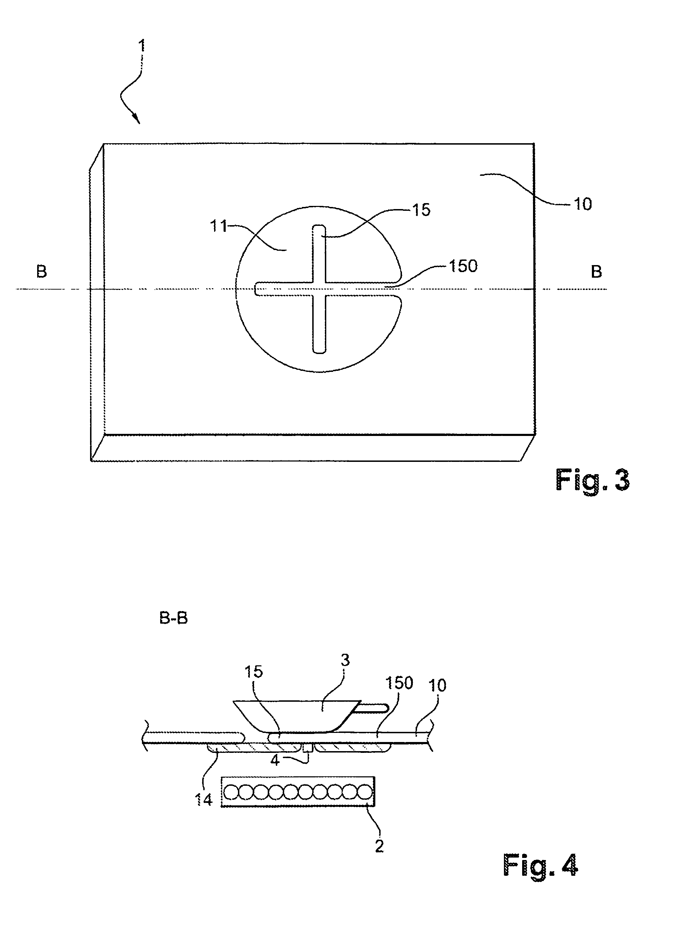

En référence aux figures 3, 4 et 5, le dispositif **1** de chauffe par induction comprend un socle **10** présentant un évidement délimitant la zone de chauffe **11,** et à l'intérieur duquel est disposé un support **15** destiné à maintenir de manière stable un récipient **3** placé dans la zone de chauffe. Le support présente une portion **150** en contact avec le bord de l'évidement du socle **10.** Une plaque amagnétique et isolant électrique **14** est disposée au niveau de l'évidement de manière à s'étendre sur toute la surface de l'évidement formant zone de chauffe **11,** et le support repose sur cette plaque amagnétique et isolant électrique **14.** L'étanchéité de l'ensemble socle, support et plaque amagnétique et isolant électrique peut être réalisé à l'aide d'un joint et/ou d'une forme biseautée du pourtour de l'évidement. La plaque amagnétique et isolant électrique **14** présente un évidement dans lequel est disposé un capteur de température **4** dont la partie sensible est en contact avec le support **15.** Un inducteur **2** est placé sous le socle **10** en regard de la zone de chauffe **11.**

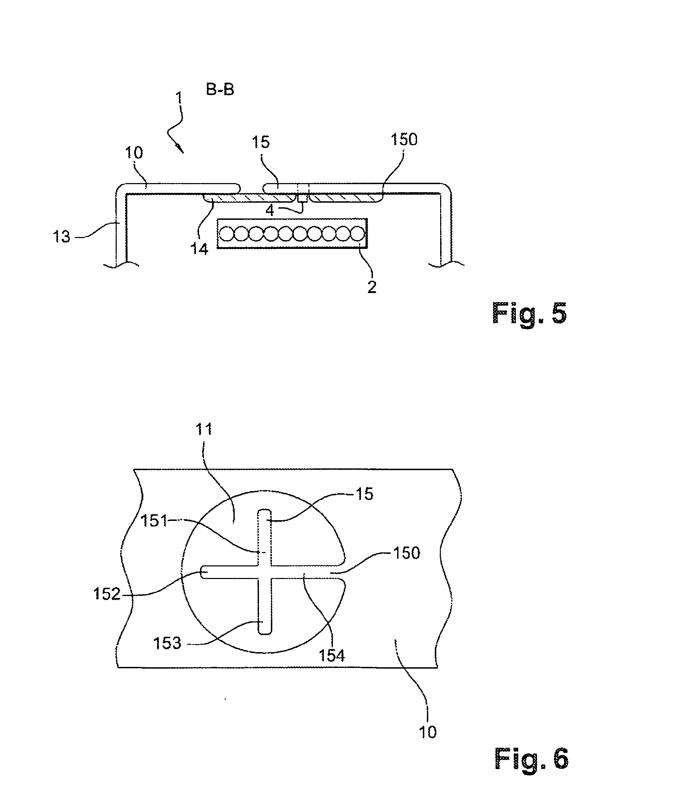

Le socle **10** et le support **15** sont réalisés dans un matériau métallique amagnétique ou non, et de préférence, résistant aux chocs, à l'abrasion dus aux frottements des récipients, ainsi qu'aux hautes températures pouvant être atteintes lors d'une chauffe. Il peut avantageusement s'agir d'acier inoxydable, de préférence austénitique. En outre, comme illustré partiellement sur la figure 5, les bordures du socle **10** forment un carter **13** du dispositif de chauffe global. Il est possible de former le carter **13** et le socle **10** à partir d'une plaque en acier inoxydable, par emboutissage, et de réaliser le support **15** par découpe de cette plaque métallique. Par exemple, un outil de presse peut permettre de réaliser une telle pièce en une seule opération.

Lors de la chauffe du récipient **3** disposé à l'intérieur de la zone de chauffe **11,** le support **15** ne s'étendant pas sur toute la zone de chauffe **11,** le transfert de chaleur du récipient **3** sur le support **15** est limité. De même, le support **15** n'étant en contact avec le socle **10** que par l'intermédiaire d'une portion **150,** le transfert de chaleur du support **15** au socle **10** est également limité.

Le support **10** maintient le récipient **3** de manière stable au dessus de l'évidement du socle **10** et isole la plaque amagnétique et isolant électrique **14** de tout contact avec le récipient **3.** La plaque amagnétique et isolant électrique **14** ne subit donc pas les chocs et abrasions dus aux frottements des récipients, les contraintes mécaniques étant reportées sur le support **15.** Par conséquent, un matériau moins épais, moins résistant aux chocs et aux abrasions, et moins coûteux, par exemple du grès ou de la céramique, peut être utilisé pour la réalisation de la plaque amagnétique et isolant électrique **14.**

Cette configuration particulière de l'ensemble formé par le socle **10,** le support **15** et la plaque amagnétique et isolant électrique **14** autorise la combinaison de différents matériaux autre que la vitrocéramique, et permet de réduire les dimensions de l'entrefer formé entre l'inducteur **14** et le récipient **3.** Le rendement est ainsi amélioré et les coûts de fabrication de l'inducteur ainsi que les fuites électromagnétiques sont réduits. Par exemple, l'épaisseur formée par celle de la plaque amagnétique et isolant électrique **14** combinée à celle du support **15** peut être inférieure ou égale à cinq millimètres. En outre, la combinaison de différents matériaux permet de différencier visuellement le dispositif de chauffe par induction des dispositifs de chauffe par radiants classiques. L'invention offre ainsi de nouvelles possibilités, notamment esthétique, permettant de proposer des dispositifs de chauffe haut de gamme grâce notamment à l'utilisation de l'acier inoxydable, ou destinés à des professionnels. L'intégration des dispositifs de chauffe dans des fourneaux ou de dessus des cuisinières, est également rendue possible.

Par ailleurs, l'utilisation d'un matériau métallique, notamment pour le support **15** permet une mesure plus précise de la température représentative de celle du récipient **3.** L'utilisation d'un matériau métallique identique pour le support **15** et le socle **10** facilite la fabrication du dispositif **1** de chauffe par induction. Cela supprime les décharges électriques susceptibles de traverser le corps d'une personne touchant le récipient, la portion **150** du support **15** en contact avec le socle **10** reliant le récipient à la terre. De plus, les fuites électromagnétiques par rayonnement sont réduites puisque le support recouvert par le récipient, le socle, et le carter forment une boîte quasi-close analogue à une quasi-cage de Faraday.

Dans un autre mode de réalisation, la plaque amagnétique et isolant électrique **14** peut être réalisée par surmoulage sur le support **15** et le capteur de température **4.** En outre, cette plaque amagnétique et isolant électrique **14** est optionnelle dans la mesure où l'inducteur **2** possède une surface supérieure suffisamment résistante mécaniquement sur laquelle le support **15** peut être posé directement. Dans ce mode de réalisation particulier, l'étanchéité de l'ensemble formé par la surface de l'inducteur, le support et le socle peut être réalisée à l'aide de joints adaptés. Par exemple, le nettoyage du dispositif de chauffe est rendu plus aisé en réalisant une transition douce entre les différents matériaux utilisés.

Les choix de la forme et de la taille du support **15** résultent notamment d'un compromis qui permet de maintenir le récipient de manière stable au dessus de l'évidement, de mesurer précisément la température du récipient, et ce même si le récipient présente un fond déformé, tout en limitant la surface de contact entre le support et le récipient pour réduire les transferts thermiques du récipient sur le support **15** et le socle **10.**

De manière générale, la géométrie du support pourra être le résultat d'un compromis entre :
- une surface suffisante pour maintenir le récipient au dessus de l'évidement, de sorte que le plus petit récipient utilisable ne touche la plaque amagnétique et isolant électrique, et ce même si le fond du récipient présente des déformations ;
- une surface découpée présentant un minimum de couplage avec le champ magnétique inducteur afin d'éviter que le support ne soit le siège de courants induits trop importants ;
- une surface de contact minimale pour limiter les échanges de chaleur avec le récipient ; et
- une surface et une inertie thermique optimisée pour assurer un transfert thermique optimal vers le capteur de température qui lui est associé.

Par exemple, le support **15** peut comprendre une première portion en forme d'étoile présentant une pluralité de branches, l'extrémité libre d'une des branches étant solidarisée au socle. Dans cette configuration, le récipient peut être maintenu stable, et la surface de contact du support avec le récipient est limitée, améliorant le rendement, et la chaleur transmise par le récipient au support peut être répartie de manière homogène sur le support quelle que soit la forme du fond du récipient, améliorant la précision de la mesure de la température.

En référence à la figure 6, le support **15** présente quatre branches **151, 152, 153, 154** réparties en croix, et l'extrémité libre **150** d'une des quatre branches est solidarisée au socle **10.**

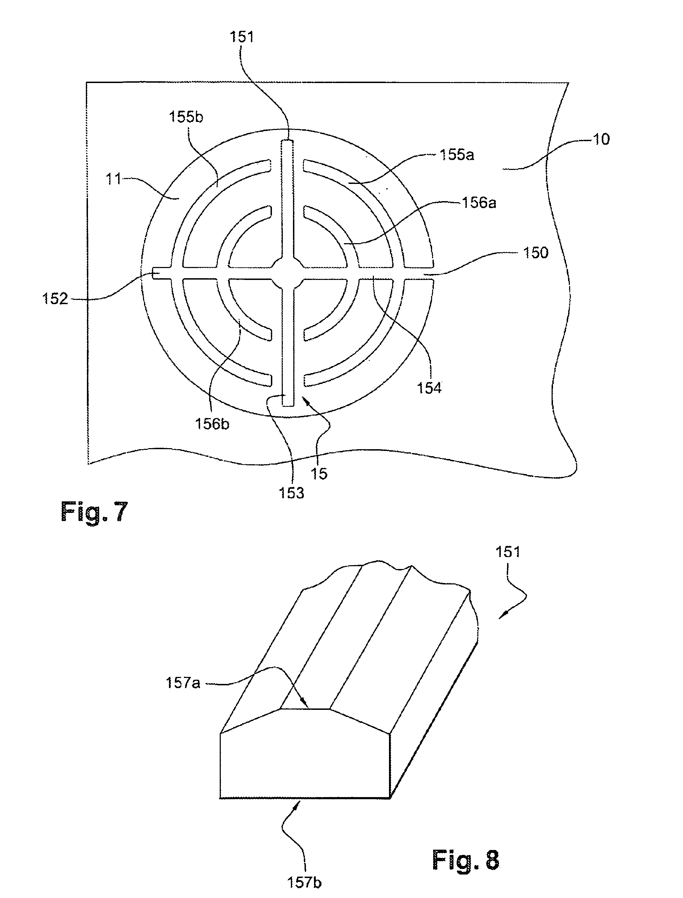

En référence à la figure 7, le support **15** présente une première portion formée de quatre branches **151, 152, 153, 154** réparties en croix, et l'extrémité libre **150** d'une des quatre branches est solidarisée au socle **10.** Le support présente en outre des deuxième, troisième, quatrième et cinquième portions **155a, 155b, 156a, 156b** en arc de cercle, les deuxième et troisième portions **155a, 155b** étant de longueur supérieure aux quatrième et cinquième portions **156a, 156b.** Les deuxième et troisième portions **155a, 155b** sont disposées en regard l'une de l'autre symétriquement par rapport à deux branches **151, 153** de la première portion. Les quatrième et cinquième portions **156a, 156b** sont également disposées en regard l'une de l'autre symétriquement par rapport aux deux branches **151, 153** de la première portion. Cette découpe particulière qui présente une surface plus importante offre, en plus des avantages précédemment cités, l'avantage de minimiser la force de répulsion électromagnétique éventuellement généré lors du chauffage d'un récipient en matériau amagnétique conducteur, tel que le cuivre, l'inox ou l'aluminium. En effet, les courants induits circulant dans un récipient amagnétique conducteur créent un champ magnétique qui s'oppose à celui créé par le système inducteur, repoussant de ce fait le récipient en chauffe. Cette force de répulsion est proportionnelle en première approche à la surface de la zone de chauffe, ainsi qu'à la puissance de chauffe fournie. En intercalant un élément amagnétique, ici le support en acier inoxydable austénitique, entre l'inducteur et le récipient, une partie de cette force de répulsion s'exerce sur le support, sans toutefois générer dans le support des courants induits trop importants, du fait de la forme géométrique particulière du support qui permet de minimiser ces courants induits. La chauffe du récipient non ferritique peut également être optimisée. Par exemple, en minimisant l'entrefer, et en utilisant des supports présentant des découpes (ou formes géométriques) particulières afin d'optimiser l'impédance du système inducteur dans son environnement en présence du récipient non ferritique.

En outre, on évitera de réaliser des jonctions entre le support et le socle, et de réaliser un support dont la géométrie présente une ou des boucles fermées, pour limiter la circulation des courants induits.

En référence à la figure 8, le profil de chaque branche **151, 152, 153, 154** peut présenter une base supérieure **157a** destinée à être en contact avec le récipient **3** et une base inférieure **157b** en regard de la base supérieure **157a,** la base supérieure **157a** étant de longueur inférieure à celle de la base inférieure **157b.** Ce profil a notamment l'avantage de réduire la surface de contact du support avec le récipient pour limiter les transferts thermique, tout en assurant un maintien stable du récipient, et une répartition homogène de la chaleur pour la mesure de la température.

Par ailleurs, la répartition de la chaleur étant homogène sur le support **15,** le capteur de température **4,** par exemple un thermocouple ou une thermistance à coefficient de température négatif (ou CTN), qui peut être positionné sous l'étoile, par exemple au centre de l'étoile, à savoir au niveau du point de rencontre entre les branches, peut mesurer une température très proche de la température réelle du récipient.

Le dispositif de chauffe par induction peut en outre comprendre un système de régulation de la température du récipient. En effet, une meilleure connaissance de la température du récipient permet de contrôler avec précision les fonctions telles que bouillir, rissoler, mijoter, et permet de fixer une température maximale moins élevée pour éviter les surchauffes et permettre l'utilisation de matériaux moins résistants au niveau thermique.

Il a été décrit précédemment un dispositif de chauffe comprenant une zone de chauffe, mais il est bien entendu possible de prévoir, pour un dispositif de chauffe par induction, une pluralité de zones de chauffe présentant les caractéristiques décrites précédemment.

En outre, la forme de la zone de chauffe peut être ronde, mais peut également être de forme et de tailles diverses, par exemple rectangles, oblongs, ou adaptées pour être utilisées avec une multitude d'inducteurs.

Il ressort donc de ce qui précède que la combinaison de deux matériaux pour la réalisation du socle du support et de la plaque amagnétique et isolant électrique permet de régler différents problèmes liés à l'utilisation de la vitrocéramique.

La réduction des dimensions de l'entrefer permet l'utilisation de bobines contenant moins de spires, augmente le couplage, et diminue le coût de fabrication et les fuites électromagnétiques.

Le choix de la forme et de la taille du support selon les critères présentés ci-dessus permet d'une part au récipient, même présentant un fond déformé, d'être en permanence en contact avec le support, et d'autre part à la température de se répartir uniformément sur le support, autorisant ainsi une meilleure mesure de la température.

La mesure plus précise de la température offre la possibilité de réaliser une bonne régulation thermique, à la place ou en plus des traditionnelles régulations en puissance, ainsi que l'utilisation de matériaux moins résistants aux températures élevées et moins coûteux.

Le dispositif de chauffe peut en outre être doté de fonctions supplémentaires telles que par exemple une fonction de pesée. A cette fin, le dispositif de chauffe peut comprendre un module de mesure de poids tel qu'un capteur piézoélectrique associé à un module d'acquisition et de traitement des signaux. Le capteur piézoélectrique peut être disposé entre le support et la plaque isolante, ou d'une autre manière dans le dispositif, dans la mesure où il existe une liaison mécanique (par exemple un axe) apte à transmettre toute déformation mécanique du support au module de mesure de poids.

Afin d'assurer une déformation minimale mais suffisante du support pour agir sur le capteur piézoélectrique, notamment lorsque qu'un récipient est disposé sur le support, le support peut être assemblé de façon souple. Par exemple, un joint en silicone résistant en température peut être disposé entre le support et la plaque isolante.

Le dispositif peut en outre être doté d'une fonction de cuisson automatique, à savoir par exemple l'arrêt automatique de la cuisson en fonction du type d'aliment à cuire et du poids détecté. A cette fin, le dispositif peut en outre être muni d'un module de contrôle qui détermine la puissance de chauffe adaptée ainsi que la fin ou la durée de la cuisson en fonction de données saisies par l'utilisateur, telles que par exemple l'indication du mode de cuisson et du type d'aliment à cuire (sauces, , rôtis, poissons, légumes, pâtes, etc.), et en fonction du poids avant cuisson et du poids détecté en cours de cuisson.

Pour un nettoyage aisé de l'ensemble, il est possible d'agrandir l'évidement, c'est-à-dire que l'évidement englobe à la fois la ou les zone(s) de chauffe ainsi que toute surface de la plaque isolante exploitable par l'utilisateur. On réduit ainsi les recoins dans lesquels les salissures sont susceptibles de s'y incruster.

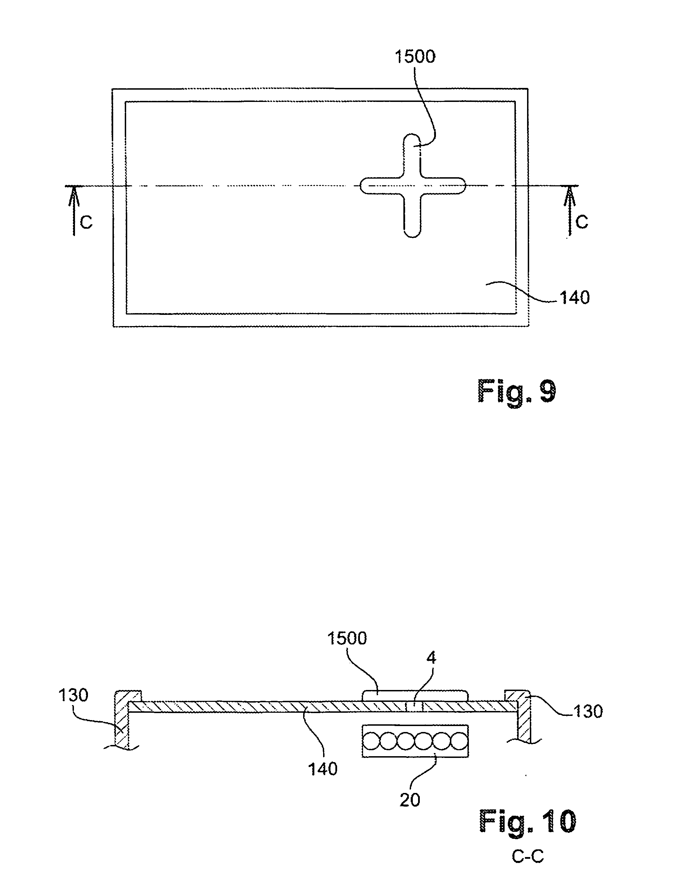

Ainsi, dans un autre mode de réalisation illustré aux figures 9 et 10, le dispositif de chauffe par induction peut comprendre notamment :
- un inducteur **20** définissant une zone de chauffe ;
- un support **1500,** par exemple en matériau métallique, pour récipient disposé à l'aplomb de l'inducteur **20,** présentant par exemple une forme en croix ; et
- une plaque **140** amagnétique et isolant électriquement disposée entre le support **1500** et l'inducteur **20,** le support **1500** reposant sur ladite plaque **140** iso lante ; et
- un cadre **130,** par exemple en matériau métallique, formant le carter du dispositif de chauffe globale, et relié au potentiel de référence.

Le support **1500** peut être relié au cadre **130** via un bras s'étendant du cadre au support, pour assurer la sécurité de l'utilisateur.

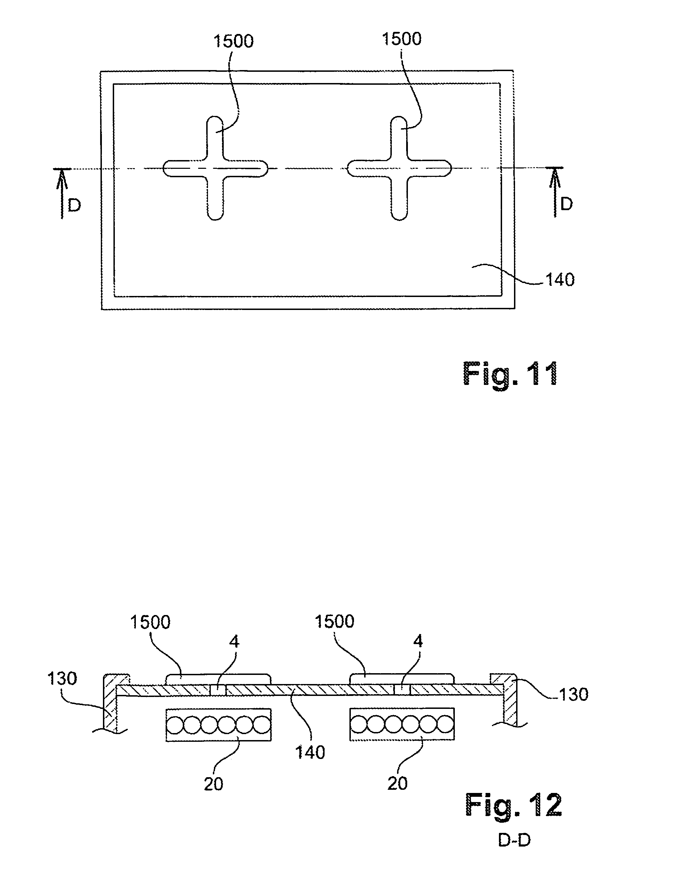

Par exemple, comme illustré sur les figures 11 et 12, le dispositif de chauffe comprend :
- des supports **1500** pour récipients, chacun étant disposé à l'aplomb d'un inducteur **20** définissant une zone de chauffe ;
- la plaque **140** amagnétique et isolant électriquement disposée entre les supports **1500** et les inducteurs **20,** les supports **1500** reposant sur cette plaque **140** isolante ; et
- le cadre **130** formant le carter du dispositif de chauffe globale, et relié au potentiel de référence.

Comme on peut le constater, dans cet autre mode de réalisation, le cadre 130 peut s'assimiler au socle de l'une des réalisations précédemment décrites, dans laquelle les bordures du socle peuvent former le carter du dispositif de chauffe, à la différence que l'évidement s'étend bien au-delà de la zone de chauffe et englobe la ou les zone(s) de chauffe et toute surface de la plaque isolante exploitable par l'utilisateur.

Bien évidemment, la mise en place d'un capteur de température et/ou d'un module de mesure de poids est possible, et peut être réalisée comme décrit précédemment. Le capteur de température permet par exemple de mieux réguler la température de chauffe pour garantir à la fois une cuisson optimale et une température adaptée à la plaque isolante.

Ainsi, la solution de l'invention permet notamment de diminuer les coûts de fabrication, de proposer un dispositif offrant une meilleure résistance aux chocs, aux abrasions et aux hautes températures grâce notamment à l'utilisation de l'acier inoxydable, de diminuer l'entrefer entre l'inducteur et le récipient, de connaître avec précision la température des récipients, d'augmenter le rendement énergétique, et de supprimer les éventuels décharges électriques que pourraient ressentir l'utilisateur lorsqu'il touche le récipient en chauffe.

En outre, la possibilité d'utiliser des matériaux autre que la vitrocéramique permet de proposer des dispositifs de chauffe par induction haut de gamme se différenciant des dispositifs de chauffe par éléments radiants classiques, destinés au marché grand public ou professionnel. La possibilité de combiner différents matériaux de formes, de tailles et de couleurs variées, offre notamment de nouvelles possibilités esthétiques qui permettent de différencier visuellement le dispositif de chauffe par induction de l'invention des dispositifs traditionnels de chauffe par induction ou par radiants. Grâce à l'invention qui autorise notamment l'utilisation de l'acier inoxydable, il est désormais possible de proposer des dispositifs de chauffe par induction haut de gamme. Il est enfin possible d'intégrer dans les formes de support, des éléments de design permettant de différentier visuellement les foyers de cuisson pour les apparenter soit à une marque, soit à un modèle particulier.

## Revendications

1. Dispositif (1) de chauffe par induction comprenant au moins un socle (10) présentant au moins une zone de chauffe (11), au moins un inducteur (2) disposé sous le socle (10) en regard de la zone de chauffe (11),
***caractérisé* en ce que** le socle (10) comprend un évidement délimitant la zone de chauffe (11), et à l'intérieur duquel est disposé un support (15) recouvrant partiellement ladite zone de chauffe (11) et partiellement solidarisé au socle (10), ledit support (15) étant apte à supporter un récipient (3) de sorte à maintenir ledit récipient (3) au dessus de l'évidement.

2. Dispositif selon la revendication 1, ***caractérisé* en ce que** le socle (10) et le support (15) sont en matériaux métalliques.

3. Dispositif selon l'une des revendications 1 ou 2, ***caractérisé* en ce qu'**il comprend en outre une plaque en matériau amagnétique (14) électriquement isolant, s'étendant sur toute la zone de chauffe (11) et sur lequel repose ledit support (15).

4. Dispositif selon la revendication 2, ***caractérisé* en ce qu'**il comprend en outre au moins un capteur de température (4) dont la partie sensible est en contact avec le support (15).

5. Dispositif selon la revendication 3, ***caractérisé* en ce que** la plaque amagnétique et isolant électrique (14) présente au moins un évidement dans lequel est disposé au moins un capteur de température (4) dont la partie sensible est en contact avec le support (15).

6. Dispositif selon la revendication 3, ***caractérisé* en ce que** la plaque amagnétique et isolant électrique (14) est surmoulé au support (15) et à au moins un capteur de température (4) dont la partie sensible est en contact avec le support (15).

7. Dispositif selon l'une des revendications 1 à 6, ***caractérisé* en ce que** le support (15) est en forme d'étoile présentant une pluralité de branches (151, 152, 153, 154), l'extrémité libre (150) d'au moins une desdites branches étant solidarisée au socle (10).

8. Dispositif selon l'une des revendications 1 à 6, ***caractérisé* en ce que** le support (15) présente au moins une première portion en forme de croix, l'extrémité libre (150) d'au moins une des branches de ladite portion étant solidarisée au socle.

9. Dispositif selon la revendication 8, ***caractérisé* en ce que** le support présente en outre au moins des deuxième et troisième portions (155a, 155b) en arc de cercle, disposées en regard l'une de l'autre symétriquement par rapport à au moins une des branches de ladite première portion.

10. Dispositif selon l'une des revendications 1 à 6, ***caractérisé* en ce que** le support est en forme d'étoile, le profil de chaque branche dudit support présentant une base supérieure (157a) destinée à être en contact avec le récipient (3) et une base inférieure (157b) en regard de ladite base supérieure (157a), ladite base supérieure (157a) étant de longueur inférieure à celle de la base inférieure (157b).

11. Dispositif selon l'une des revendications 3 à 10, ***caractérisé* en ce que** l'épaisseur formée par celle de la plaque amagnétique (14) combinée à celle du support (15) est inférieure ou égale à cinq millimètres.

12. Dispositif selon l'une des revendications 4 à 11, ***caractérisé* en ce que** le capteur de température (4) est en regard du centre du support (15).

13. Dispositif selon l'une des revendications 1 à 12, ***caractérisé* en ce que** les bordures du socle (10) forment le cadre du dispositif de chauffe globale.

14. Dispositif selon l'une des revendications 1 à 13, ***caractérisé* en ce que** le socle (10) est relié à un potentiel de référence.

15. Dispositif selon l'une des revendications 1 à 14, ***caractérisé* en ce qu'**il comprend en outre un système de régulation de la température du récipient.

16. Dispositif selon l'une des revendications 1 à 15, ***caractérisé* en ce qu'**il comprend en outre un dispositif visuel fonction de la température du support.

17. Dispositif selon l'une des revendications 1 à 16, ***caractérisé* en ce qu'**il comprend en outre un module de mesure de poids d'objet posé sur le support.

18. Dispositif selon la revendication 17, ***caractérisé* en ce qu'**il comprend en outre un module de régulation et de sécurisation apte à partir de la mesure du poids du récipient à réguler la puissance maximale de chauffe.

19. Dispositif selon l'une des revendications 1 à 18, ***caractérisé* en ce que** le socle est en outre muni de reliefs aptes à maintenir ou recevoir des accessoires de types électriques ou mécaniques.

## Claims

1. Induction heating device (1) comprising at least one base (10) having at least one heating area (11), and at least one inductor (2) arranged under the base (10) opposite the heating area (11),
**characterised in that** the base (10) comprises a recess delimiting the heating area (11) and inside which a support (15) is arranged partially covering the said heating area (11) and partially secured to the base (10), the said support (15) being able to support a receptacle (3) so as to hold the said receptacle (3) above the recess.

2. Device according to claim 1, **characterised in that** the base (10) and the support (5) are made from metal materials.

3. Device according to one of claims 1 or 2, **characterised in that** it also comprises a plate made from non-magnetic electrically insulating material (14), extending over the entire heating area (11), and on which the said support (15) rests.

4. Device according to claim 2, **characterised in that** it also comprises at least one temperature sensor (4) the sensitive part of which is in contact with the support (15).

5. Device according to claim 3, **characterised in that** the non-magnetic electrically insulating plate (14) has at least one recess in which at least one temperature sensor is arranged (4), the sensitive part of which is in contact with the support (15).

6. Device according to claim 3, **characterised in that** the non-magnetic electrically insulating plate (14) is moulded onto the support (15) and onto at least one temperature sensor (4) the sensitive part of which is in contact with the support (15).

7. Device according to one of claims 1 to 6, **characterised in that** the support (15) is in the form of a star having a plurality of arms (151, 152, 153, 154), the free end (150) of at least one of the said arms being secured to the base (10).

8. Device according to one of claims 1 to 6, **characterised in that** the support (15) has at least one first cruciform portion, the free end (150) of at least one of the arms of the said portion being secured to the base.

9. Device according to claim 8, **characterised in that** the support also has at least second and third portions (155a, 155b) in an arc of a circle, arranged opposite each other symmetrically with respect to at least one of the arms of the said first portion.

10. Device according to one of claims 1 to 6, **characterised in that** the support is in the form of a star, the profile of each arm of the said support having a top base (157a) intended to be in contact with the receptacle (3) and a bottom base (157b) opposite the said top base (157a), the said top base (157a) having a length less than that of the bottom base (157b).

11. Device according to one of claims 3 to 10, **characterised in that** the thickness formed by that of the non-magnetic plate (14) combined with that of the support (15) is less than or equal to five millimetres.

12. Device according to one of claims 4 to 11, **characterised in that** the temperature sensor (4) is opposite the centre of the support (15).

13. Device according to one of claims 1 to 12, **characterised in that** the rims of the base (10) form the frame of the global heating device.

14. Device according to one of claims 1 to 13, **characterised in that** the base (10) is connected to a reference potential.

15. Device according to one of claims 1 to 14, **characterised in that** it also comprises a system for regulating the temperature of the receptacle.

16. Device according to one of claims 1 to 15, **characterised in that** it also comprises a visual device that is a function of the temperature of the support.

17. Device according to one of claims 1 to 16, **characterised in that** it also comprises a module for measuring the weight of the object placed on the support.

18. Device according to claim 17, **characterised in that** it also comprises a regulation and protection module able, from the measurement of the weight of the receptacle, to regulate the maximum heating power.

19. Device according to one of claims 1 to 18, **characterised in that** the base is also provided with reliefs able to hold or receive accessories of the electrical or mechanical type.

## Patentansprüche

1. Vorrichtung zum induktiven Heizen mit mindestens einem Sockel (10), der mindestens einen Heizbereich (11) aufweist, und mit mindestens einem unter dem Sockel (10) gegenüber dem Heizbereich (11) angeordneten Induktor (2), **dadurch gekennzeichnet, dass** der Sockel (10) eine Aussparung aufweist, die den Heizbereich (11) begrenzt und innerhalb deren ein Träger (15) angeordnet ist, der den Heizbereich (11) teilweise überdeckt und teilweise mit dem Sockel (10) fest verbunden ist, wobei der Träger (15) geeignet ist, einen Behälter (3) so zu tragen, dass der Behälter (3) über der Aussparung gehalten ist.

2. Vorrichtung nach Anspruch 1, **dadurch gekennzeichnet, dass** der Sockel (10) und der Träger (15) aus metallischen Materialien bestehen.

3. Vorrichtung nach einem der Ansprüche 1 oder 2, **dadurch gekennzeichnet, dass** sie ferner eine Platte aus einem elektrisch isolierenden nichtmagnetischen Material (14) umfasst, die sich über den gesamten Heizbereich (11) erstreckt und auf der der Träger (15) ruht.

4. Vorrichtung nach Anspruch 2, **dadurch gekennzeichnet, dass** sie ferner mindestens einen Temperaturfühler (4) aufweist, dessen empfindlicher Teil mit dem Träger (15) in Kontakt steht.

5. Vorrichtung nach Anspruch 3, **dadurch gekennzeichnet, dass** die elektrisch isolierende nichtmagnetische Platte (14) mindestens eine Aussparung aufweist, in der mindestens ein Temperaturfühler (4) angeordnet ist, dessen empfindlicher Teil mit dem Träger (15) in Kontakt steht.

6. Vorrichtung nach Anspruch 3, **dadurch gekennzeichnet, dass** die elektrisch isolierende nichtmagnetische Platte (14) an den Träger (15) und an mindestens einen Temperaturfühler (4), dessen empfindlicher Teil mit dem Träger (15) in Kontakt steht, angeformt ist.

7. Vorrichtung nach einem der Ansprüche 1 bis 6, **dadurch gekennzeichnet, dass** der Träger (15) die Form eines Sterns mit einer Vielzahl von Armen (151, 152, 153, 154) aufweist, wobei das freie Ende (150) mindestens eines der Arme mit dem Sockel (10) fest verbunden ist.

8. Vorrichtung nach einem der Ansprüche 1 bis 6, **dadurch gekennzeichnet, dass** der Träger (15) mindestens einen ersten kreuzförmigen Abschnitt aufweist, wobei das freie Ende (150) mindestens eines der Arme des Abschnitts mit dem Sockel fest verbunden ist.

9. Vorrichtung nach Anspruch 8, **dadurch gekennzeichnet, dass** der Träger ferner mindestens einen zweiten und einen dritten kreisbogenförmigen Abschnitt (155a, 155b) aufweist, wobei diese Abschnitte einander gegenüber symmetrisch zu mindestens einem der Arme des ersten Abschnitts angeordnet sind.

10. Vorrichtung nach einem der Ansprüche 1 bis 6, **dadurch gekennzeichnet, dass** der Träger sternförmig ist, wobei jeder Arm des Trägers im Querschnitt eine obere Basis (157a), die dazu bestimmt ist, mit dem Behälter (3) in Kontakt zu stehen, und eine untere Basis (157b) gegenüber der oberen Basis (157a) aufweist, wobei die obere Basis (157a) eine geringere Länge aufweist als die untere Basis (157b).

11. Vorrichtung nach einem der Ansprüche 3 bis 10, **dadurch gekennzeichnet, dass** die Dicke, die durch die Kombination der Dicke der nichtmagnetischen Platte (14) und der Dicke des Trägers (15) gebildet wird, kleiner oder gleich fünf Millimeter ist.

12. Vorrichtung nach einem der Ansprüche 4 bis 11, **dadurch gekennzeichnet, dass** der Temperaturfühler (4) gegenüber der Mitte des Trägers (15) angeordnet ist.

13. Vorrichtung nach einem der Ansprüche 1 bis 12, **dadurch gekennzeichnet, dass** die Ränder des Sockels (10) den Rahmen der gesamten Heizvorrichtung bilden.

14. Vorrichtung nach einem der Ansprüche 1 bis 13, **dadurch gekennzeichnet, dass** der Sockel (10) mit einem Referenzpotenzial verbunden ist.

15. Vorrichtung nach einem der Ansprüche 1 bis 14, **dadurch gekennzeichnet, dass** sie ferner ein System für die Regelung der Behältertemperatur umfasst.

16. Vorrichtung nach einem der Ansprüche 1 bis 15, **dadurch gekennzeichnet, dass** sie ferner eine die Temperatur des Trägers optisch darstellende Einrichtung umfasst.

17. Vorrichtung nach einem der Ansprüche 1 bis 16, **dadurch gekennzeichnet, dass** sie ferner ein Modul für die Messung des Gewichts eines auf den Träger gesetzten Gegenstandes aufweist.

18. Vorrichtung nach Anspruch 17, **dadurch gekennzeichnet, dass** sie ferner ein Regelungs- und Sicherungsmodul aufweist, das ausgehend von der Messung des Gewichts des Behälters geeignet ist, die maximale Heizleistung zu regeln.

19. Vorrichtung nach einem der Ansprüche 1 bis 18, **dadurch gekennzeichnet, dass** der Sockel ferner mit Strukturen versehen ist, die geeignet sind, Zubehör elektrischer oder mechanischer Art festzuhalten bzw. aufzunehmen.
